(19) **Europäisches Patentamt / European Patent Office / Office européen des brevets**

(11) **EP 2 729 777 B1**

(12) **EUROPEAN PATENT SPECIFICATION**

(45) Date of publication and mention
of the grant of the patent:
**06.09.2017 Bulletin 2017/36**

(51) Int Cl.:
***G01K 15/00*** *(2006.01)*

(21) Application number: **12810609.3**

(22) Date of filing: **06.07.2012**

(86) International application number:
**PCT/SE2012/050793**

(87) International publication number:
**WO 2013/009247 (17.01.2013 Gazette 2013/03)**

(54) **METHOD FOR TESTING TEMPERATURE SENSORS AND A TESTING DEVICE**

VERFAHREN ZUM TESTEN VON TEMPERATURSENSOREN UND TESTVORRICHTUNG

PROCÉDÉ D'ESSAI DE CAPTEURS DE TEMPÉRATURE ET DISPOSITIF D'ESSAI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2011 SE 1150654**

(43) Date of publication of application:
**14.05.2014 Bulletin 2014/20**

(73) Proprietor: **Scania CV AB
151 87 Södertälje (SE)**

(72) Inventors:
• **STRÅÅT, Fredrik
S-113 35 Stockholm (SE)**
• **ZAMANI, Sebastian
S-112 15 Stockholm (SE)**

(74) Representative: **Scania CV AB
Patents, GP 117kv
151 87 Södertälje (SE)**

(56) References cited:
WO-A1-00/11524          WO-A1-2008/103784
JP-A- 7 225 530          JP-A- 7 225 530
US-A- 3 759 083          US-A- 3 759 083
US-A1- 2004 013 161      US-A1- 2006 104 330
US-A1- 2006 104 330      US-B2- 7 654 733
US-B2- 7 654 733

**Description**

Field of the invention

The present invention relates to a method and a device according to the preambles of the independent claims.

Background to the invention

The present invention is particularly intended for resistive temperature sensors, so-called thermistors, which are used in vehicles, but it is of course also applicable generally to resistive temperature sensors.

A thermistor is generally an electronic component, a resistor, whose resistance depends on temperature. There are many areas of use, e.g. in electronic thermometers, thermostats and overheating protection. There are thermistors with a very large number of resistance values and different sensitivities. There are thermistors with both positive temperature coefficient PTC and negative temperature coefficient NTC. The resistance of the positive type increases with rising temperature whereas the resistance of the negative type drops when the temperature increases.

In the power train of trucks there are currently various resistive temperature sensors, thermistors, e.g. NTCs, which have a negative temperature coefficient, and PT200s, which have a positive temperature coefficient.

Figure 1 is a typical graph for an NTC thermistor, in this case of the 2 kΩ/25°C type, i.e. indicating a temperature of 25°C at resistance 2 kΩ. With an electronic control unit it is possible to read off the resistance and thereby determine the temperature.
To measure the resistance, so-called voltage division is employed in the control unit

Figure 2 is a simple schematic diagram of a temperature sensor with a temperature-sensitive resistor R2 and a resistor R1 which is of known resistance. The temperature sensor is connected to the voltage $V_S$ and the current I flows through the resistors R1 and R2.
The voltage U is measured across R2 and the following relationship applies according to Ohm's law:

$$V_S = (R1 + R2) \times I$$

$$I = U/R2$$

An expression thus arrived at for the resistance R2 is $R2 = \dfrac{R1 \times U}{V_S - U}$

The voltage U is thus measured across the NTC resistor (R2) when it is connected in series with a known resistor. It is thus possible to calculate the resistance and hence the temperature.

There are a number of legal requirements for heavy vehicles within the EU (e.g. Euro5 and Euro6), e.g. with regard to emission limits for exhaust gases, noise levels etc. Some of these requirements are related to certain temperature levels, e.g. there is no need to meet the requirements if the temperature is for example lower than +5°C. This combines with vehicle manufacturers' own need to set requirements with regard to accuracy and reliability. There sometimes even has to be redundancy (extra sensors) to meet legal requirements. There is also risk that less scrupulous owners/hauliers might try to cheat by manipulating temperature sensors to give incorrect indications. There are also legal requirements for protection of the equipment.

The patent specifications described below refer to calibration and testing of thermistors.

US-2006/0104330 refers to a method and a device for calibrating a thermistor, particularly for a recording head in an ink-jet recorder. In simple terms, this is done by warming the thermistor by applying a constant voltage or a constant power and measuring the resistance before and after the warming of the thermistor. Data used in the calibration can thus be gathered.

WO-98/55977 refers to an electronic heat detector consisting of a thermistor. By applying a voltage in the form of a test pulse for 10 seconds, the function of the thermistor can be tested by observing whether it is thereby warmed.

US 3759083 discloses a sensing element response time measuring system. A resistance temperature detector, which is one arm of a bridge circuit, is heated by an electric current separate from the bridge exciting current, to a temperature higher than its environmental temperature. The time required for the RTD to cool through a predetermined temperature range after the heating current is removed is measured to determine the response time of the RTD.

US 7654733 discloses a method an a device for indentifying a temperature sensor connected to a control unit. A controller of a hob is connected to a temperature sensor of a radiation based heating element. In principle, two different groups of temperature sensors can be used, whose resistance values differ by approximately a factor of three. When the hob is first used, the resistance of the temperature sensor is measured at room temperature and is classified in one of the two groups of temperature sensors on the basis of a limit value between the two typical temperature profiles of the groups of temperature sensors. On the basis of this, calibration of the controller is carried out for the purpose of adjusting to the established group to which the temperature sensor belongs.

WO 2008/103784 discloses apparatus, system, and method for high resolution identification with temperature dependent resistive device. A temperature measuring and identification device (TMID) obtains identification information and temperature information of a connected device having a temperature sensing circuit (TSC). The TSC includes a temperature sensing element (TSE) connected in parallel with a voltage clamping network (VCN) that limits the voltage across the TSE to an identification voltage within an identification voltage range when the voltage is greater than or equal to a lower voltage of the identification voltage range. When a voltage below the lower range is applied to the TSC, the VCN appears as an open circuit and the resistance of the TSC corresponds to temperature. A translation circuit within the TMID shifts TSC voltages within the identification voltage range to a normalization voltage range. Accordingly, voltages corresponding to temperature as well as voltages corresponding to identification are within the normalization voltage range. As a result, the resolution of a voltage sensing device used for measuring the temperature and identification voltages is maximized.

JP H07225530 discloses a diagnostic device of a thermal fixing device. A defect of a resistance type temperature sensor is diagnosed. A voltage is impressed on the resistance type temperature sensor, promoting self-heat generation and comparing detected resistances before/after. From the change in resistance values before/after the self-heat generation, the resistance type temperature sensor such as a thermistor is diagnosed. Thus, the presence of the defect of the resistance type temperature sensor is judged in a short time without heating the thermal fixing device.

The object of the present invention is to improve the checking of temperature sensors, inter alia to prevent manipulation of them.

Summary of the invention

The above objects are achieved with the invention as it is defined by the independent claims 1 and 10.
Preferred embodiments are defined by the dependent claims.
As the temperature sensor according to the present invention has a resistance, it is possible to develop power in the sensor by applying a voltage pulse across it, e.g. with an amplitude of the order of 5 volts and a duration not longer than one second. When energy is supplied, the temperature of the sensor will also rise. The invention thus makes it possible to diagnose the sensor, i.e. to verify that it really exhibits a temperature dependency. It is preferably also possible to calibrate the accuracy of the temperature measurement, and the offset voltage, and ensure that it gives correct temperatures.
In brief, the method according to the invention comprises

1. measuring the resistance
2. applying a specific voltage for a specific time
3. measuring the resistance

Ascertaining the difference between the measured resistances before and after the voltage pulse is applied to the temperature-dependent resistor, and comparing the difference with one or more predetermined threshold values, is a simple way of verifying that the resistor exhibits a temperature dependency.

The resulting measured data may then be used to calculate the temperature increase which should have occurred and thereby determine whether the temperature sensor works as it should and has not been subject to manipulation. The resistor may also be checked to see that the actual temperature measured at step 1 is correct. If it is not, then any offset error can be calculated and the calibration then be altered accordingly.

To sum up, the method and the test device according to the present invention afford inter alia the following advantages compared with prior art:

- no need for redundant temperature sensors
- sensor can be diagnosed without using other sensors
- potential manipulation can be prevented
- sensor can be calibrated for more accurate measurement
- any offset can be detected

Brief description of drawings

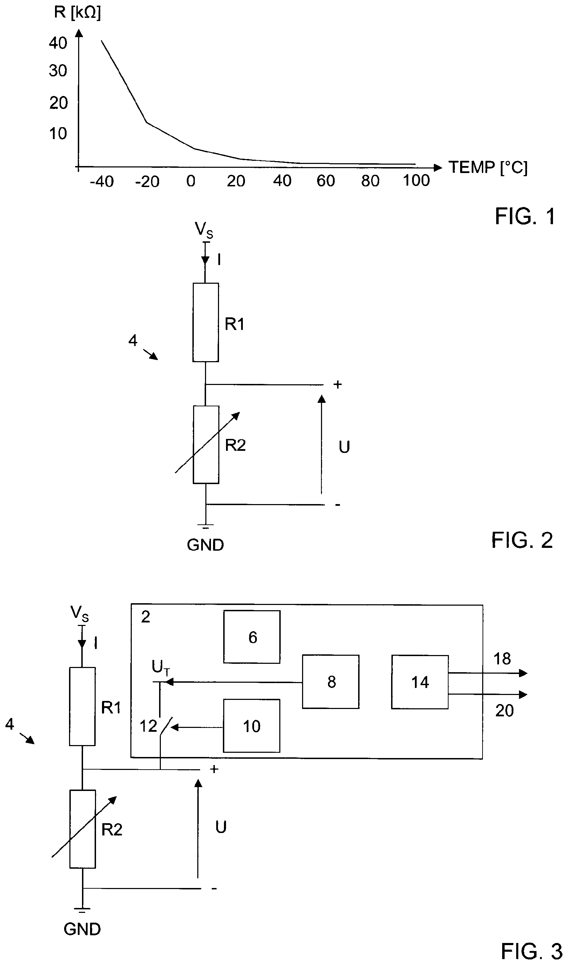

Figure 1 is a schematic graph of how the temperature varies with the resistance for an NTC resistor.
Figure 2 is a schematic diagram of a known temperature sensor.
Figure 3 is a block diagram illustrating the test device according to the present invention when testing a temperature sensor.

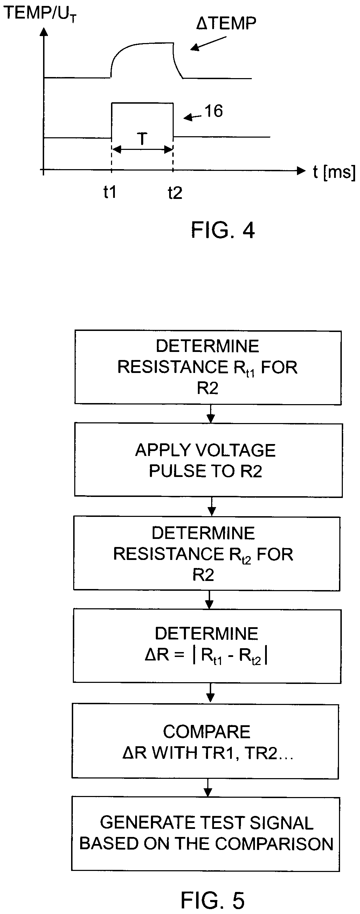

Figure 4 is a schematic graph illustrating the present invention.
Figure 5 is a flowchart illustrating the method according to the invention.

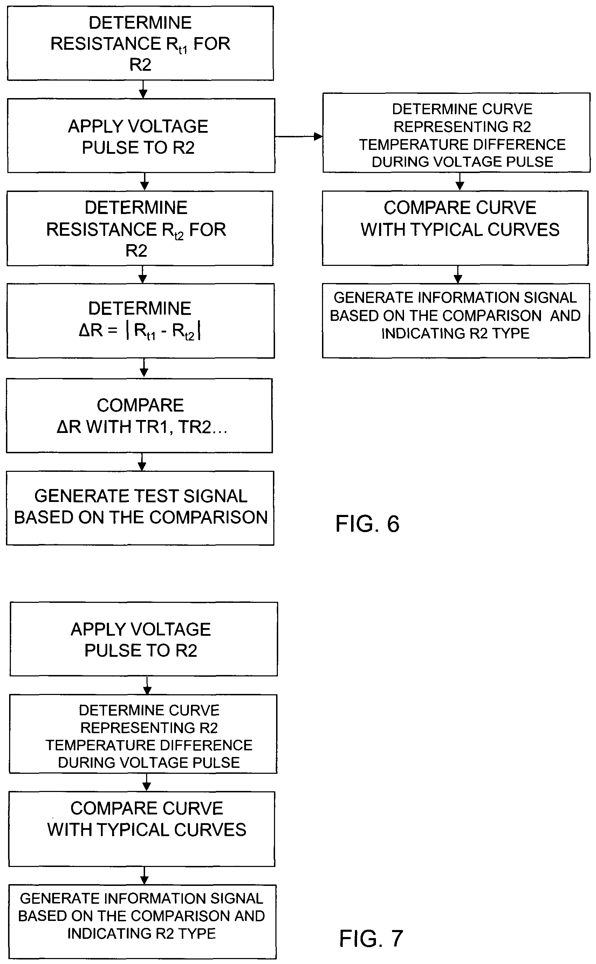

Figure 6 is a flowchart illustrating an embodiment of the method according to the invention.
Figure 7 is a flowchart illustrating an alternative embodiment according to the present invention.

Detailed description of preferred embodiments of the invention

The invention is described below in detail with reference to the attached drawings. Figure 3 is a block diagram illustrating the test device according to the present invention when testing a temperature sensor.
Figure 3 thus depicts a test device 2 for testing a temperature sensor 4 which comprises a temperature-dependent resistor R2. The test device comprises a measuring unit 6 adapted to determining the resistance $R_{t1}$ for R2. This is for example done by measuring the voltage across R2 and then calculating, as described above in relation to Figure 2, the resistance for R2. As the temperature depends on the resistance for R2, a measure of the temperature can also be obtained.

The test device 2 further comprises a voltage supply circuit 8, a control unit 10, a changeover switch 12 and a calculation unit 14. The changeover switch is adapted to being controlled by the control unit 10 so that the voltage supply circuit 8 is connected and applies to the resistor R2 a voltage pulse 16 (see Figure 4) with a predetermined voltage amplitude $U_T$ and a predetermined duration T. After the voltage pulse 16, the resistance $R_{t2}$ is determined for R2 by the measuring unit 6.

The calculation unit 14 is adapted to determining the absolute value of the resistance difference $\Delta R = |R_{t1} - R_{t2}|$, to comparing $\Delta R$ with one or more threshold values (TR1, TR2,...) and to generating on the basis of the result of the comparison a test signal 18 which represents the result of the testing of the temperature sensor 4. The test signal may for example contain the information "OK" if $\Delta R$ exceeds at least one of said threshold values (TR1, TR2,...), signifying that the result of the test is that R2 exhibits a temperature dependency. If $\Delta R$ does not exceed any of said threshold values (TR1, TR2,...) the test signal will contain the information "not OK", signifying that the result of the test is that R2 does not exhibit the required temperature dependency.

The length (duration) of the voltage pulse depends on what type of resistor R2 is. Too long a pulse length risks destroying the resistor. According to an embodiment, the duration T adopted for the voltage pulse is shorter than 1 second. It might for example be within the range 5-50 ms, preferably about 10 ms.

The amplitude $U_T$ adopted for the voltage pulse is preferably lower than 36 volts, which is the maximum voltage available in vehicle applications. According to an embodiment, the amplitude UT is within the range 3-36 volts, more preferably 3-7 volts and preferably 5 volts.

According to an embodiment of the test device 2, the calculation unit 14 is adapted to determining a curve which represents the change in the temperature of R2 during the voltage pulse. This is illustrated schematically in Figure 4, in which the voltage pulse 16 is the lower curve, with a clearly quadrilateral shape. The diagram shows starting and end times (t1 and t2 respectively) and the pulse length T. The upper curve shows how the resistor's temperature changes during the voltage pulse. It initially rises quickly but the rate of increase slackens and the temperature levels out towards a stable value. At t2 the temperature begins to decrease and then drops back towards the previous level.

The curve determined, or parameters for the curve determined, may then be compared with a set of curves, or parameters for a set of curves, which represent different types of temperature-dependent resistors. An example of a parameter which may be used for identifying the curve is the point in time at which 63% of the maximum temperature during the voltage pulse is reached. An information signal 20 (see Figure 3) is then generated on the basis of the comparison and may thus indicate the type of resistor for R2.

The invention comprises also a method for testing a temperature sensor which itself comprises a temperature-dependent resistor (R2). The method is described below mainly with reference to the flowchart in Figure 5.

Figures 6 and 7 cover embodiments of the method according to the invention.

The method comprises

- determining the resistance $R_{t1}$ for R2,
- applying to the resistor R2 a voltage pulse with a predetermined voltage amplitude $U_T$ and a predetermined duration T,
- determining the resistance Rt2 for R2 after the voltage pulse,
- determining the absolute value of the resistance difference $\Delta R = |R_{t1} - R_{t2}|$,
- comparing $\Delta R$ with one or more threshold values (TR1, TR2,...),
- generating on the basis of the result of the comparison a test signal which represents the result of the testing of the temperature sensor.

How these steps are conducted was described in detail above in the description of the test device.

The test signal generated thus indicates the result of the test as to whether R2 exhibits a temperature tendency, i.e. whether $\Delta R$ is above or below any of said threshold values (TR1, TR2,...), e.g. by the signal containing the information "OK" or "not OK".

According to the method, the duration T of the voltage pulse is shorter than 1 second, more preferably within the range 5-15 ms, preferably about 10 ms. The amplitude $U_T$ of the voltage pulse is lower than 36 volts, e.g. within the range 3-36 volts, more preferably 3-7 volts and preferably 5 volts.

According to an embodiment illustrated by the flowchart in Figure 6, the method comprises not only the steps described above in relation to Figure 5 but also

- determining a curve which represents the change in the temperature of R2 during the voltage pulse,
- comparing the curve determined, or parameters for the curve determined, with a set of curves, or parameters for a set of curves, which represent different types of temperature-dependent resistors, and
- generating on the basis of the comparison an information signal which indicates the type of resistor for R2. This too was described in detail above.

According to an alternative embodiment illustrated in Figure 7, these steps are performed without going through the other steps, by

- applying to the resistor R2 a voltage pulse with a predetermined voltage amplitude $U_T$ and a predetermined duration T,
- determining a curve which represents the change in the temperature of R2 during the voltage pulse,
- comparing the curve determined, or parameters for the curve determined, with a set of curves, or parameters for a set of curves, which represent different types of temperature-dependent resistors, and
- generating an information signal which is based on the comparison and indicates the type of resistor for R2.

The present invention is not restricted to the preferred embodiments described above. Sundry alternatives, modifications and equivalents may be used. The above embodiments are therefore not to be regarded as limiting the invention's protective scope which is defined by the attached claims.

**Claims**

1. A method for testing a temperature sensor which comprises a temperature-dependent resistor (R2), the method comprising a step of:

   - applying to the resistor R2 a voltage pulse (16) with a predetermined voltage amplitude $U_T$ and a predetermined duration T,

   **characterised in that** the method further comprises steps of:

   - determining a curve which represents the change in the temperature of R2 during the voltage pulse (16),
   - comparing the curve determined, or parameters for the curve determined, with a set of curves, or parameters for a set of curves, which represent different types of temperature-dependent resistors, and
   - generating on the basis of the comparison an information signal which indicates the type of resistor for R2.

2. A method according to claim 1, comprising the steps of

   - before the step of applying the voltage pulse (16) to the resistor R2, determining the resistance $R_{t1}$ for R2,
   - determining the resistance $R_{t2}$ for the resistor R2 after the voltage pulse (16),
   - determining the absolute value of the resistance difference $\Delta R = |R_{t1} - R_{t2}|$,
   - comparing $\Delta R$ with one or more threshold values (TR1, TR2,...), and
   - generating on the basis of the result of the comparison a test signal which represents the result of the testing of the temperature sensor.

3. A method according to any one of the foregoing claims, in which the duration T of the voltage pulse (16) is shorter than 1 second.

4. A method according to any one of the foregoing claims, in which the duration T of the voltage pulse (16) is within the range 5-50 ms.

5. A method according to any one of the foregoing claims, in which the duration T of the voltage pulse (16) is 10 ms.

6. A method according to any one of the foregoing claims, in which the amplitude $U_T$ of the voltage pulse (16) is lower than 36 volts.

7. A method according to any one of the foregoing claims, in which the amplitude $U_T$ of the voltage pulse (16) is within the range 3-7 volts.

8. A method according to any one of the foregoing claims, in which the amplitude $U_T$ of the voltage pulse (16) is 5 volts.

9. A method according to any one of claims 2-8, in which if $\Delta R$ exceeds at least one of said threshold values (TR1, TR2,...) the result of the test is that R2 exhibits a temperature dependency.

10. A test device (2) for testing a temperature sensor (4) which comprises a temperature-dependent resistor (R2), which test device (2) comprises a measuring unit (6) adapted to determining the resistance $R_{t1}$ of the resistor R2, a voltage supply circuit (8), a control unit (10), a changeover switch (12) and a calculation unit (14), wherein the changeover switch (12) is adapted to being controlled by the control unit (10) so that the voltage supply circuit (8) is connected and applies to the resistor R2 a voltage pulse (16) with a predetermined voltage amplitude $U_T$ and a predetermined duration T, **characterised in that** the calculation unit (14) is adapted to determining a curve which represents the change in the temperature of R2 during the voltage pulse (16), to comparing the curve determined, or parameters for the curve determined, with a set of curves, or parameters for a set of curves, which represent different types of temperature-dependent resistors, and to generating on the basis of the comparison an information signal (20) which indicates the type of resistor for R2.

11. The test device according to claim 10, in which the resistance $R_{t2}$ for the resistor R2 after the voltage pulse (16) being determined by the measuring unit (6), and that the calculation unit (14) is adapted to determining the absolute value of the resistance dif-

ference $\Delta R = |R_{t1} - R_{t2}|$, to comparing $\Delta R$ with one or more threshold values (TR1, TR2,...) and to generating on the basis of the result of the comparison a test signal (18) which represents the result of the testing of the temperature sensor.

12. The test device according to any one of claims 10 or 11, in which the duration T of the voltage pulse (16) is shorter than 1 second.

13. The test device according to any one of claims 10-12, in which the duration T of the voltage pulse (16) is within the range 5-50 ms.

14. The test device according to any one of claims 10-13, in which the duration T of the voltage pulse (16) is 10 ms.

15. The test device according to any one of claims 10-14, in which the amplitude $U_T$ of the voltage pulse (16) is lower than 36 volts.

16. The test device according to any one of claims 10-15, in which the amplitude $U_T$ of the voltage pulse (16) is within the range 3-7 volts.

17. The test device according to any one of claims 10-16, in which the amplitude $U_T$ of the voltage pulse (16) is 5 volts.

18. The test device according to any one of claims 11-17, in which if $\Delta R$ exceeds at least one of said threshold values (TR1, TR2,...) the result of the test is that R2 exhibits a temperature dependency.

**Patentansprüche**

1. Verfahren zum Testen eines Temperatursensors, der einen temperaturabhängigen Widerstand (R2) aufweist, wobei das Verfahren aufweist:

    - Beaufschlagen des Widerstands R2 mit einem Spannungsimpuls (16) mit einer vorgegebenen Spannungsamplitude $U_T$ und einer vorgegebenen Dauer T,

    **dadurch gekennzeichnet, dass** das Verfahren ferner die Schritte aufweist:

    - Bestimmen einer Kurve, die die Temperaturänderung von R2 während des Spannungsimpulses (16) repräsentiert,
    - Vergleichen der bestimmten Kurve oder von Parametern für die bestimmte Kurve mit einer Kurvenschar oder mit Parametern für die Kurvenschar, die verschiedene Typen temperaturabhängiger Widerstände repräsentieren, und

    - Erzeugen eines Informationssignals auf Basis des Vergleichs, das den Typ des Widerstands R2 angibt.

2. Verfahren nach Anspruch 1, das die Schritte aufweist:

    - vor dem Schritt des Beaufschlagens des Widerstands R2 mit dem Spannungsimpuls (16) Bestimmen des Widerstandswertes $R_{t1}$ für R2,
    - Bestimmen des Widerstandswertes $R_{t2}$ für R2 nach dem Spannungsimpuls (16),
    - Bestimmen des Absolutwertes der Widerstandsdifferenz $\Delta R = | R_{t1} - Rt_2 |$,
    - Vergleichen von $\Delta R$ mit einem oder mehreren Schwellenwerten (TR1, TR2, ...), und
    - Erzeugen eines Testsignals auf Basis des Vergleichs, das das Testresultat des Temperatursensors angibt.

3. Verfahren nach einem der vorigen Ansprüche, bei dem die Dauer T des Spannungsimpulses (16) kürzer ist als 1 Sekunde.

4. Verfahren nach einem der vorigen Ansprüche, bei dem die Dauer T des Spannungsimpulses (16) im Bereich von 5 bis 50 msec liegt.

5. Verfahren nach einem der vorigen Ansprüche, bei dem die Dauer T des Spannungsimpulses (16) 10 msec beträgt.

6. Verfahren nach einem der vorigen Ansprüche, bei dem die Amplitude $U_T$ des Spannungsimpulses (16) geringer ist als 36 Volt.

7. Verfahren nach einem der vorigen Ansprüche, bei dem die Amplitude $U_T$ des Spannungsimpulses (16) im Bereich von 3 bis 7 Volt liegt.

8. Verfahren nach einem der vorigen Ansprüche, bei die Amplitude $U_T$ des Spannungsimpulses (16) 5 Volt beträgt.

9. Verfahren nach einem der Ansprüche 2 bis 8, bei dem dann, wenn $\Delta R$ mindestens einen der Schwellenwerte (TR1, TR2, ...) überschreitet, das Testresultat bedeutet, dass R2 eine Temperaturabhängigkeit aufweist.

10. Testvorrichtung (2) zum Testen eines Temperatursensors (4), der einen temperaturabhängigen Widerstand (R2) aufweist, wobei die Testvorrichtung (2) eine Messeinheit (6) aufweist, die zum Bestimmen des Widerstandwertes $R_{t1}$ des Widerstands (R2) eingerichtet ist, eine Spannungsversorgungsschaltung (8), eine Steuereinheit (10), einen Umschalter (12) und eine Berechnungseinheit (14), wobei der Umschalter (12) zur Steuerung durch die Steuereinheit (10) eingerichtet ist, so dass die Spannungsversorgungsschaltung (8) mit dem Widerstand R2 verbunden ist und einen Spannungsimpuls (16) mit einer vorgegebenen Spannungsamplitude $U_T$ und einer vorgegebenen Dauer T an diesen anlegt,

**dadurch gekennzeichnet, dass** die Berechnungseinheit (14) zum Bestimmen einer Kurve eingerichtet ist, die die Temperaturänderung von R2 während des Spannungsimpulses (16) repräsentiert, zum Vergleichen der bestimmten Kurve oder von Parametern für die bestimmte Kurve mit einer Kurvenschar oder mit Parametern für die Kurvenschar, die verschiedene Typen temperaturabhängiger Widerstände repräsentieren, und zum Erzeugen eines Informationssignals (20) auf Basis des Vergleichs, das den Typ des Widerstands für R2 angibt.

11. Testvorrichtung nach Anspruch 10, wobei der Widerstandswert $R_{t2}$ für R2 nach dem Spannungsimpuls (16) durch die Messeinheit (6) bestimmt wird, und wobei die Berechnungseinheit (14) dazu eingerichtet ist, den Absolutwert der Widerstandsdifferenz $\Delta R = | R_{t1} - R_{t2} |$ zu bestimmen, $\Delta R$ mit einem oder mehreren Schwellenwerten (TR1, TR2, ...) zu vergleichen und auf Basis des Vergleichs ein Testsignals (18) zu erzeugen, das das Testresultat des Temperatursensors angibt.

12. Testvorrichtung nach einem der Ansprüche 10 oder 11, wobei die Dauer T des Spannungsimpulses (16) kürzer ist als 1 Sekunde.

13. Testvorrichtung nach einem der Ansprüche 10 bis 12, wobei die Dauer T des Spannungsimpulses (16) im Bereich von 5 bis 50 msec liegt.

14. Testvorrichtung nach einem der Ansprüche 10 bis 13, wobei die Dauer T des Spannungsimpulses (16) 10 msec beträgt.

15. Testvorrichtung nach einem der Ansprüche 10 bis 14, wobei die Amplitude $U_T$ des Spannungsimpulses (16) geringer ist als 36 Volt.

16. Testvorrichtung nach einem der Ansprüche 10 bis 15, wobei die Amplitude $U_T$ des Spannungsimpulses (16) im Bereich von 3 bis 7 Volt liegt.

17. Testvorrichtung nach einem der Ansprüche 10 bis 16, wobei die Amplitude $U_T$ des Spannungsimpulses (16) 5 Volt beträgt.

18. Testvorrichtung nach einem der Ansprüche 11 bis 17, wobei dann, wenn $\Delta R$ mindestens einen der Schwellenwerte (TR1, TR2, ...) überschreitet, das Testresultat bedeutet, dass R2 eine Temperaturabhängigkeit aufweist.

**Revendications**

1. Procédé pour tester un capteur de température qui comprend une résistance dépendante de la température (R2), le procédé comprenant une étape consistant à :

   - appliquer à la résistance R2 une impulsion de tension (16) avec une amplitude de tension prédéterminée $U_T$ et une durée prédéterminée T,

   **caractérisé en ce que** le procédé comprend, en outre , les étapes suivantes :

   - déterminer une courbe qui représente le changement de température de R2 durant l'impulsion de tension (16),
   - comparer la courbe déterminée, ou des paramètres de la courbe déterminée, avec un ensemble de courbes, ou des paramètres d'un ensemble de courbes, qui représentent différents types de résistances dépendantes de la température, et
   - générer, sur la base de la comparaison, un signal d'information qui indique le type de résistance pour R2.

2. Procédé selon la revendication 1, comprenant les étapes suivantes :

   - avant l'étape d'application de l'impulsion de tension (16) à la résistance R2, déterminer la résistance $R_{t1}$ pour R2,
   - déterminer la résistance $R_{t2}$ pour la résistance R2 après l'impulsion de tension (16),
   - déterminer la valeur absolue de la différence de résistance $\Delta R = | R_{t1} - R_{t2} |$,
   - comparer $\Delta R$ avec une ou plusieurs valeurs seuil (TR1, TR2, ....), et
   - générer, sur la base du résultat de la comparaison, un signal de test qui représente le résultat du test du capteur de température.

3. Procédé selon l'une quelconque des revendications précédentes, dans lequel la durée T de l'impulsion de tension (16) est inférieure à 1 seconde.

4. Procédé selon l'une quelconque des revendications précédentes, dans lequel la durée T de l'impulsion de tension (16) se situe dans la plage de 5 à 50 ms.

5. Procédé selon l'une quelconque des revendications précédentes, dans lequel la durée T de l'impulsion de tension (16) est de 10 ms.

**6.** Procédé selon l'une quelconque des revendications précédentes, dans lequel l'amplitude $U_T$ de l'impulsion de tension (16) est inférieure à 36 volts.

**7.** Procédé selon l'une quelconque des revendications précédentes, dans lequel l'amplitude $U_T$ de l'impulsion de tension (16) se situe dans la plage de 3 à 7 volts.

**8.** Procédé selon l'une quelconque des revendications précédentes, dans lequel l'amplitude $U_T$ de l'impulsion de tension (16) est de 5 volts.

**9.** Procédé selon l'une quelconque des revendications 2 à 8, dans lequel, si $\Delta R$ dépasse au moins l'une desdites valeurs seuil (TR1, TR2, ....), le résultat du test est que R2 montre une dépendance à la température.

**10.** Dispositif de test (2) pour tester un capteur de température (4) qui comprend une résistance dépendante à la température (R2), lequel dispositif de test (2) comprend une unité de mesure (6) adaptée pour déterminer la résistance $R_{t1}$ pour la résistance R2, un circuit d'alimentation de tension (8), une unité de commande (10), un commutateur (12) et une unité de calcul (14), dans lequel le commutateur (12) est adapté pour être commandé par l'unité de commande (10) de telle sorte que le circuit d'alimentation de tension (8) est connecté et applique à la résistance R2 une impulsion de tension (16) avec une amplitude de tension prédéterminée $U_T$ et une durée prédéterminée T,
**caractérisé en ce que** l'unité de calcul (14) est adaptée pour déterminer une courbe qui représente le changement de température de R2 pendant l'impulsion de tension (16), comparer la courbe déterminée, ou des paramètres de la courbe déterminée, avec un ensemble de courbes, ou des paramètres d'un ensemble de courbes, qui représentent différents types de résistances dépendantes de la température, et générer, sur la base de la comparaison, un signal d'information (20) qui indique le type de résistance pour R2.

**11.** Dispositif de test selon la revendication 10, dans lequel la résistance $R_{t2}$ pour la résistance R2, après l'impulsion de tension (16), est déterminée par l'unité de mesure (6), et dans lequel l'unité de calcul (14) est adaptée pour déterminer la valeur absolue de la différence de résistance $\Delta R = |\ R_{t1} - R_{t2}\ |$, comparer $\Delta R$ avec une ou plusieurs valeurs seuil (TR1, TR2, ....), et générer, sur la base du résultat de la comparaison, un signal de test (18) qui représente le résultat du test du capteur de température.

**12.** Dispositif de test selon l'une quelconque des revendications 10 ou 11, dans lequel la durée T de l'impulsion de tension (16) est inférieure à 1 seconde.

**13.** Dispositif de test selon l'une quelconque des revendications 10 à 12, dans lequel la durée T de l'impulsion de tension (16) se situe dans la plage de 5 à 50 ms.

**14.** Dispositif de test selon l'une quelconque des revendications 10 à 13, dans lequel la durée T de l'impulsion de tension (16) est de 10 ms.

**15.** Dispositif de test selon l'une quelconque des revendications 10 à 14, dans lequel l'amplitude $U_T$ de l'impulsion de tension (16) est inférieure à 36 volts.

**16.** Dispositif de test selon l'une quelconque des revendications 10 à 15, dans lequel l'amplitude $U_T$ de l'impulsion de tension (16) se situe dans la plage de 3 à 7 volts.

**17.** Dispositif de test selon l'une quelconque des revendications 10 à 16, dans lequel l'amplitude $U_T$ de l'impulsion de tension (16) est de 5 volts.

**18.** Dispositif de test selon l'une quelconque des revendications 11 à 17, dans lequel si $\Delta R$ dépasse au moins l'une desdites valeurs seuil (TR1, TR2, ....), le résultat du test est que R2 montre une dépendance à la température.

FIG. 1

FIG. 2

FIG. 3

TEMP/U$_T$

ΔTEMP

16

T

t [ms]

t1    t2

FIG. 4

DETERMINE
RESISTANCE R$_{t1}$ FOR
R2

↓

APPLY VOLTAGE
PULSE TO R2

↓

DETERMINE
RESISTANCE R$_{t2}$ FOR
R2

↓

DETERMINE
ΔR = | R$_{t1}$ - R$_{t2}$ |

↓

COMPARE
ΔR WITH TR1, TR2...

↓

GENERATE TEST SIGNAL
BASED ON THE COMPARISON

FIG. 5

DETERMINE
RESISTANCE $R_{t1}$ FOR
R2

APPLY VOLTAGE
PULSE TO R2

DETERMINE
RESISTANCE $R_{t2}$ FOR
R2

DETERMINE
$\Delta R = | R_{t1} - R_{t2} |$

COMPARE
$\Delta R$ WITH TR1, TR2...

GENERATE TEST SIGNAL
BASED ON THE COMPARISON

DETERMINE CURVE
REPRESENTING R2
TEMPERATURE DIFFERENCE
DURING VOLTAGE PULSE

COMPARE CURVE
WITH TYPICAL CURVES

GENERATE INFORMATION SIGNAL
BASED ON THE COMPARISON AND
INDICATING R2 TYPE

FIG. 6

APPLY VOLTAGE
PULSE TO R2

DETERMINE CURVE
REPRESENTING R2
TEMPERATURE DIFFERENCE
DURING VOLTAGE PULSE

COMPARE CURVE
WITH TYPICAL CURVES

GENERATE INFORMATION SIGNAL
BASED ON THE COMPARISON AND
INDICATING R2 TYPE

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060104330 A
- WO 9855977 A
- US 3759083 A
- US 7654733 B
- WO 2008103784 A
- JP H07225530 B